# EUROPEAN PATENT SPECIFICATION

(11) **EP 0 612 941 B1**
(45) Date of publication and mention of the grant of the patent: **08.07.1998**
(21) Application number: 94830084.3
(22) Date of filing: 24.02.1994
(51) Int. Cl.: F16K 3/04

(54) **Gas flow control valve arrangement**
Ventilanordnung zum Regeln eines Gasstromes
Arrangement de soupape pour régler l'écoulement de gaz

(30) Priority: 26.02.1993 IT BO930069
(43) Date of publication of application: 31.08.1994
(73) Proprietor: A.M. DI VANINI GIUSEPPE & C. S.n.c., I-40139 Bologna (IT)
(72) Inventor: Fonsati, Claudio, I-40068 S. Lazzaro di Savena, Bologna (IT)
(74) Representative: Lanzoni, Luciano

(56) References cited:
- EP-A- 0 097 315
- DE-A- 70 617
- DE-A- 97 245
- FR-A- 992 678

## Description

The present invention relates to a gas flow control valve arrangement, in particular for industrial burners.

The term industrial burner generically describes those appliances used to generate heat in a variety of industrial applications, for example the firing of paints or bricks in infrared tunnel kilns, or in special equipment for the manufacture of components fashioned in glass (vials, bottles, electric light bulbs, etc.).

Certain of these burners utilize a mixture of air (serving to assist combustion, which is delivered forcibly either by suction or by blowing, according to the type of engineering solution adopted in the burner) and natural gas (the fuel), supplied by respective nozzles with interconnected regulating levers. Most gas burners encountered in domestic applications are used typically to heat a fluid of which the temperature does not need to be held at a constant value, so that the gas can be supplied to the appliance by means of a simple on/off control, whereas burners of the industrial type in question are designed for a type of space heating in which constant temperatures are fundamentally important, and achieved by monitoring and direct regulation of the fuel mixture, or at least the gas, supplied to the kiln.

To this end, use is made of variable flow on/off valves installed on the gas inlet pipeline. The valve most widely adopted is a rotary "disc" type driven by a stepping motor or similar actuator, designed for installation on a straight gas inlet pipeline, which comprises at least one annular sealing element interposed between two sections of the pipeline and occupying a position outside their circumference, with which the regulating disc is paired in flush contact; the disc is keyed at the centre in such a way as to rotate about its own axis (vertically disposed in most instances) when activated from externally of the valve, thereby widening or narrowing the passage afforded by the annular element and thus varying the flow of gas to the burner during operation.

German Patent DE-C-97 245 discloses a mechanical valve for controlling the gas flow in a burner which comprises a casing encompassing a radial chamber internally of which is positioned a valve element. The valve element has a disk with a series of calibrating holes having different increasing passage sections. The rotation of the disk element permit the selection of one hole for the passage of the gas and correspondingly a regulation of the gas flow. Since the disk element presents only a given number of holes, the regulation of the rate of gas flow is possible in discrete way and not continuosly. In the French Patent FR-A-992 678 is disclosed another valve particularly adapted to be used with a spray nozzle for spraying liquid products for the agricultural field. In this case, the valve element comprises a disk with a single hole and, therefore, it is not possible to control the rate of flow of the liquid, but it is only possible to open or to close completely the valve.

An arrangement according to the preamble of claim 1 is generally known in the art. The architecture of the disc valve thus outlined, as exhibited hitherto (the present specification is not concerned with the many control valves having pneumatically or hydraulically controlled elements and driven vertically with axis disposed normal to the axis of the pipeline, since these belong to a decidedly superior class of application), does not allow for a proportional type of control, inasmuch as the dimensional values of the flow passages are such that a steady angular variation of the control means will not always give place to a proportional (or rather controllable) change in the rate of flow at which fluid is admitted; moreover, the margin for error increases as different setting ranges are selected for the valve.

In short, significant problems are experienced in adapting a given valve assembly to the different demands of a burner, even when utilizing electronic control equipment with a simple rotary control and linear output.

Accordingly, the object of the present invention is to overcome such drawbacks by providing a gas flow control valve arrangement featuring simplicity in construction, and economy, and affording a flow passage of which the regulation will be both finer than obtainable hitherto and effectively proportional to the input applied by the external control, thereby responding more exactly to given operating requirements.

The stated object is realized in a control valve arrangement as characterized in claim 1. Preferred embodiments are defined in the dependent claims.

The invention will now be described in detail, by way of example, with the aid of the accompanying drawings, in which:
- fig 1 shows a gas flow control valve according to the invention, viewed in vertical section;
- fig 2 shows a detail of the valve of fig 1, viewed in vertical section;
- fig 3 shows the detail of fig 2, viewed in plan from above;
- figs 4a, 4b, 4c and 4d are schematic plan views of the valve elements in a valve as in fig 1, showing possible compositions and combinations of the rings which determine the dimensions of the flow passage afforded to the gas;
- fig 5 shows a detail of the valve of fig 1 in an alternative embodiment.

Referring to the accompanying drawings, the valve according to the present invention is designed for application to a gas pipeline incorporating a first half-casing 1 and a second half-casing 2 each with a centre hole, which are matched, mutually opposed and connected one to the other axially by way of respective flanges 1f and 2f.

The half-casings 1 and 2 are connected respectively to a first pipeline 3, through which gas flows at a given inlet pressure, and to a second pipeline 4 through which the gas flows at an outlet pressure determined by the pressure drop registering across the valve; the valve itself is positioned between the two matched half-casings 1 and 2 and comprises a seat 5 supporting a first valve element of disc type, denoted 7 in its entirety, rotatable through a given angle α (preferably a right angle, as in the particular example illustrated) about its own vertical axis through the agency of external drive means 8 and creating a flow passage L by which the gas is allowed to pass at a given rate of flow from the first pipeline 3 to the second pipeline 4.

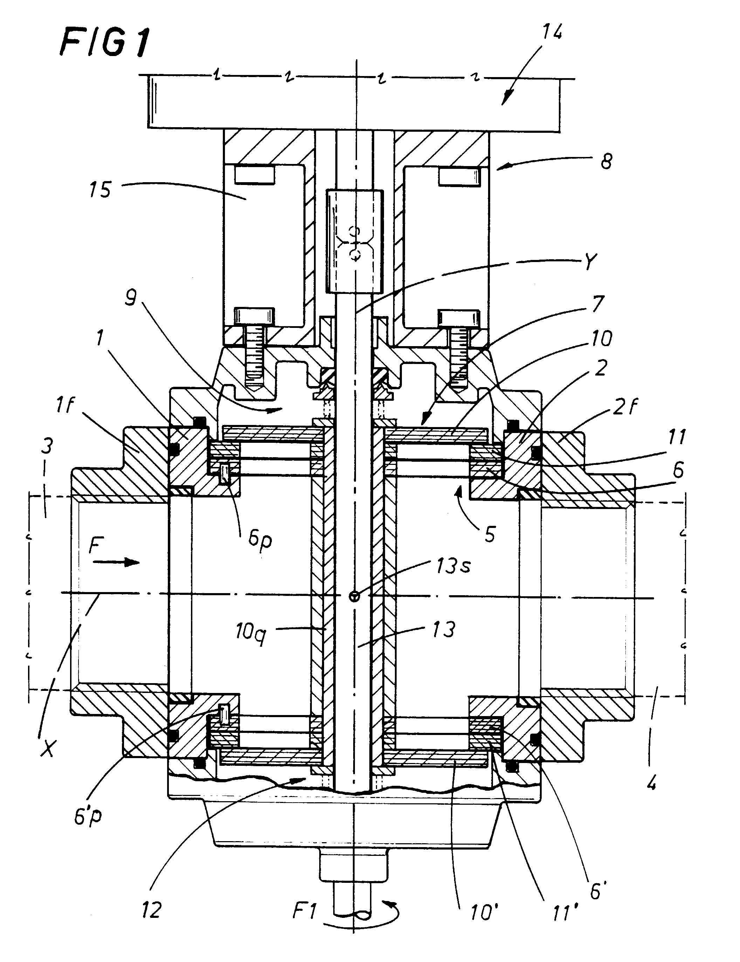

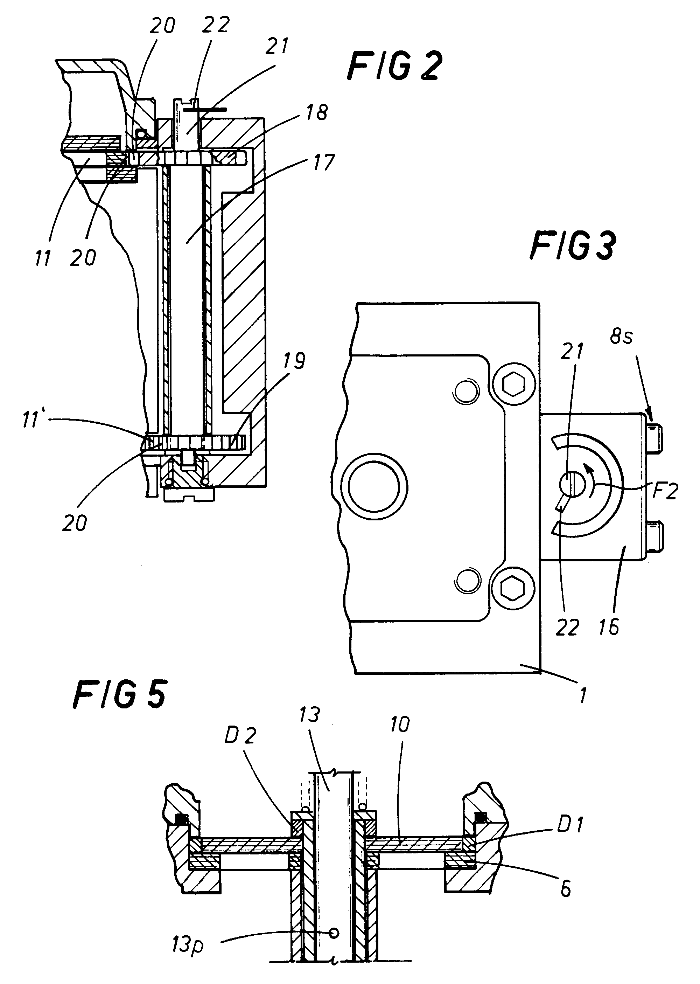

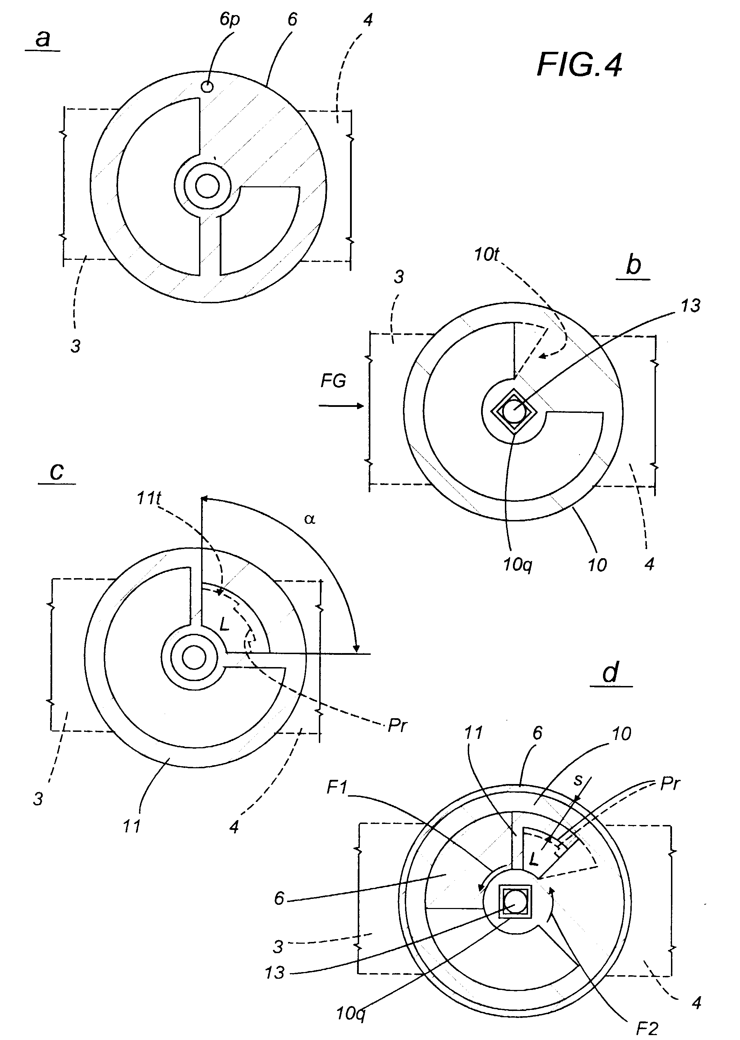

The half-casings 1 and 2 also combine to create a first radial chamber 9 (fig 1) affording passage to the gas and housing the valve element 7, disposed with its axis of rotation normal to the axis X of the connected pipelines 3 and 4; the valve element 7 comprises a first ring 6, which functions as a support as well as partially occluding the first radial chamber 9 against the flow of gas in that it affords a solid sector measuring approximately 90° (fig 4a), also a second ring 10 (fig b) disposed parallel to the first ring 6, connected rigidly to the drive means 8 and rotatable thus about its own vertical axis Y through a plurality of angularly distinct intermediate positions between two limit positions, separated by the angle α aforementioned, in which the flow passage L is completely occluded and open, respectively.

More exactly, the first ring 6 occupies a fixed position within the assembled valve, retained by a reference pin denoted 6p in figs 1 and 4a, whilst the second ring 10 is rigidly associated with a spindle 13, keyed to a sleeve 10q of square profile (discernible also in fig 4b) made secure by means of a further pin 13s, and coupled thus to the drive means 8 (see fig 1).

In the preferred embodiment of fig 1, the valve comprises a third ring 11, interposed between the first and second rings 6 and 10 and serving in effect to create a second valve element of radial depth denoted S, also proportioned to the preferred angle α (fig 4c), which is rotatable independently of the second ring 10 through the agency of second drive means, denoted 8s, between a limit position of non-interference in the radial direction, and a limit position of radial interference in which the second valve element is displaced, likewise through the same angle α and within the compass of the flow passage L defined by the first valve element 7, in such a way as to determine a different rate of flow between the pipelines 3 and 4.

As discernible in fig 1, the operating section of the valve disclosed is duplicated by incorporating a second radial chamber 12 into the half-casings 1 and 2, matched symmetrically to the first radial chamber 9 and fitted with a corresponding set of first, second and third rings denoted 6', 10' and 11' respectively, identical to those of the first radial chamber 9; the duplicate second ring 10' is coupled to the drive means 8 in the manner already described, i.e. by way of the spindle 13, which extends vertically through the half-casings 1 and 2 to interconnect the two sets of rings.

The drive means denoted 8 might consist, by way of example, in an electric actuator 14 (conventional in embodiment and therefore indicated only in part) secured to the top of the assembled half-casings 1 and 2 by way of a mounting bracket 15 and coupled thus to the spindle 13, which occupies a central position within the half-casings 1 and 2, rotatable about its own vertical axis and carrying the keyed second rings 10 and 10'.

Figs 2 and 3 afford a more detailed illustration of the second drive means 8s, which are composed of a housing 16 associated laterally with one of the two half-casings 1 or 2, disposed at right angles to the axis of the pipelines 3 and 4, also a vertical pivot 17 positioned internally of the housing 16, able to rotate about its own axis, and two serrated wheels 18 and 19 keyed one to each end of the pivot and in mesh with corresponding serrations afforded by the two respective third rings 11 and 11'; the vertical pivot 17 presents a shank 21 of reduced diameter that projects from the housing 16 and is connected to a manual adjustment lever 22 by means of which to select the position of the third rings 11 and 11'.

The operation of a valve thus embodied will now be described.

Gas flowing in the direction indicated by the arrow denoted F in fig 1 passes from the inlet pipeline 3 into the relative half-casing 1, through the flow passage L afforded by the second rings 10 and 10' and into the two radial chambers 9 and 12, thence into the remaining half-casing 2 and away from the valve by way of the outlet pipeline 4.

To vary the rate at which gas flows through the valve, it suffices to enlarge or restrict the flow passage L created by each second ring 10 and 10' in combination with the open portion of the relative first ring 6 and 6'; this is effected by rotating the spindle 13 (arrow F1 in figs 1 and 4) in such a way that the second rings 10 and 10' are displaced in relation to the first rings 6 and 6', assuming a different angular position with each movement and widening or narrowing the opening in consequence.

Evidently, the angular positions assumed by the second rings 10 and 10' can be many in number (as discernible from fig 4d), according to the required flow rate.

The range of adjustment within which the flow F of gas is regulated can be changed (for example, where a valve may be required to service differing flow demands) by means of the third ring 11 (11'), which impinges radially on the flow passage L afforded by the adjacent second ring 10 (10'). More precisely, the effect of repositioning the third ring 11 (11') by operating the lever 22 (arrow F2, fig 4), which induces rotation between its two limit positions, is that the flow of gas allowed through the radial chamber 9 (12) can be proportioned to the area of the passage afforded by the second ring 10 (10'), minus the solid portion of the third ring 11 (11') occupying the passage (i.e. L - S, as discernible from fig 4).

It will be clear from the foregoing that the valve according to the present invention is remarkably versatile in operation and readily adaptable to different requirements in application; in effect, the valve can be assembled with one only or with two sets of rings 6, 10 and 11, and moreover, the third ring 11 is easily rotated back and forth to the end of altering the adjustment range, without stripping down the valve and replacing the rings.

The rate of flow is therefore changed by metering in two different directions (angular and radial, in relation to the flow passage), thereby affording a simpler type of control, with clear benefits over comparable prior art solutions in terms of improved consumption, efficiency and reliability.

The rings of the valve element 7 thus far described and illustrated exhibit a regular geometry which determines a proportional relationship between the angular displacement of the spindle 13 and the area of the flow passage L; this geometry might also be modified and adapted, according to requirements, in that the shape of the solid portions exhibited by the rings 6, 10 and 11 could be different from that illustrated in bold lines, for example stepped or non-linear (phantom lines 10t and 11t in figs 4b and 4c), in such a way as to occasion variations of the flow passage that are not exactly proportional (as with the modified profile denoted Pr in fig 4). This added measure of control, achievable simply by changing the rings of the valve element, confirms the validity of the solution disclosed.

Fig 5 illustrates a simplified embodiment of the valve which comprises only the first and second rings 6 and 10; in this instance ordinary distance rings D1 and D2 are added to restore the original dimensional values, with respect to the remaining components of the valve.

The further option exists of positioning the rings of fig 4 differently, that is, not with the solid portions disposed asymmetrically in relation to the flow of gas, denoted FG, but rather symmetrically in such a manner as to limit or at all events to ensure a uniform distribution of pressure losses attributable to friction.

## Claims

1. A gas flow control valve arrangement for installation on a pipeline, said arrangement comprising:
- at least a first half-casing (1) and a second half-casing (2), each half-casing being provided with a centre hole, said half-casings (1, 2) being mutually opposed and connected axially one to the other by way of fluid-tight flanges (1f, 2f) in alignment with a horizontal axis (X) and being adapted to be associated respectively with a first pipeline (3) through which gas enters at an inlet pressure and a second pipeline (4) through which gas leaves the valve at a required outlet pressure;
- at least a first disc-type valve element (7); and
- an external drive means (8);
characterized in that
- said half-casings (1, 2) encompass a first radial chamber (9) affording passage to the gas, internally of which the valve element (7) is positioned;
- said disc-type valve element (7) comprises a first ring (6) and a second ring (10),
said first ring (6) being fixed to the half-casings (1, 2) and presenting a solid portion of angular value approximating to the angle (α) of rotation, said second ring (10), supported by the first ring (6), similarly presenting a solid portion of angular value approximating to the angle (α) of rotation, being placed parallel to and interacting with the first ring (6) and being constrained to rotate about its vertical axis (Y) perpendicular to said horizontal axis (X) together with the drive means (8) through a plurality of angularly distinct intermediate positions between two limit positions in order to continuously regulate the rate of gas flow through the valve, said two limit positions being separated by a distance equal to the angle (α) of rotation, in which a flow passage (L) is respectively completely open and completely occluded.

2. A valve as in claim 1, wherein the valve element (7) comprises a third ring (11) located adjacent to the first or the second ring (6, 10), functioning as a second valve element of predetermined radial depth (S) and angular value approximating to the angle (α) of rotation, rotatable independently of the second ring (10) through the agency of second drive means (8s) between a limit position of radial non-interference, and a limit position of radial interference in which the second valve element is displaced through the same angle (α), within the compass of the flow passage (L) created by the first valve element (7), in such a manner as to determine a different rate of flow of the gas from the first pipeline (3) to the second pipeline (4).

3. A valve as in claim 2, wherein the third ring (11) is interposed between the first ring (6) and the second ring (10).

4. A valve as in claim 2, wherein the third ring (11) exhibits a portion of radial depth (S) appearing as a sector to a circle and exhibiting a profile (Pr) of which the depth varies either continuously or by discrete increments.

5. A valve as in claim 1, wherein the half-casings (1, 2) encompass a second radial chamber (12) matched symmetrically with the first radial chamber (9) and occupied by first, second and third rings (6', 10', 11') respectively identical to the rings (6, 10, 11) of the first chamber, of which the second ring (10') is coupled to the drive means (8) by way of a vertically disposed spindle (13) passing through the half-casings (1, 2) and interconnecting the rings of both the radial chambers (9, 12).

6. A valve as in claim 1, wherein the drive means (8) consist in an electric actuator (14) secured to the top face of the connected half-casings (1, 2) by way of a mounting bracket (15) and coupled to a vertical spindle (13), rotatable about its own axis and passing centrally through the half-casings (1, 2), to which the second ring (10) is keyed at its centre.

7. A valve as in claims 2 and 5, wherein second drive means (8s) consist in a fluid-tight housing (16) secured laterally to one half-casing (1, 2) and disposed perpendicularly to the axis (X) of the pipelines (3, 4), and internally of the housing, a rotatable vertically disposed pivot (17) of which the ends carry respective serrated wheels (18, 19) in mesh with corresponding serrations (20) afforded by the respective third rings (11, 11'), also a shank (21) associated with the vertical pivot (17), emerging vertically from the housing (16) and connected to at least one lever (22) by means of which to adjust the position of the third rings (11, 11').

## Patentansprüche

1. Ventilanordnung zum Regeln eines Gasstromes an einem Leitungsrohr, wobei die genannte Anordnung wie folgt enthält:
- wenigstens einen ersten Halbkörper (1) und einen zweiten Halbkörper (2), jeder Halbkörper mit einer mittleren Bohrung versehen, wobei die genannten Halbkörper (1, 2) sich einander gegenüberliegen und axial einer mit dem anderen verbunden sind, und zwar durch flüssigkeitsdichtende Flansche (1f, 2f), ausgerichtet zu einer horizontalen Achse (X) und geeignet, jeweils mit einer ersten Rohrleitung (3), durch welche das Gas bei einem Einlassdruck eintritt, und einer zweiten Rohrleitung (4), durch welche das Gas das Ventil bei einem gewünschten Auslassdruck verlässt, verbunden zu werden;
- wenigstens ein ersten scheibenartiges Ventilelement (7); und
- ein aussenliegendes Antriebselement (8);
**dadurch gekennzeichnet**, dass
- die genannten Halbkörper (1, 2) eine erste radiale Kammer (9) einschliessen, die den Durchlass für das Gas bietet, und in deren Innerem das Ventilelement (7) angeordnet ist;
- das genannte scheibenartige Ventilelement (7) einen ersten Ring (6) und einen zweiten Ring (10) enthält; wobei der genannte erste Ring (6) an den Halbkörpern (1, 2) befestigt ist und einen festen Abschnitt mit einem Winkelwert aufweist, der sich dem Drehwinkel (α) nähert, und der genannte zweite Ring (10), getragen von dem ersten Ring (6), auf ähnliche Weise einen festen Abschnitt mit einem Winkelwert aufweist, der sich dem Drehwinkel (α) nähert, wobei er parallel zu dem ersten Ring (6) angeordnet ist und mit diesem zusammenwirkt, und wobei er, zusammen mit dem Antriebselement (8), zum Drehen um seine vertikale Achse (Y) rechtwinklig zu der genannten horizontalen Achse (X) gezwungen wird, und zwar durch eine Anzahl von winkelmässigen unterschiedlichen Zwischenpositionen zwischen zwei Grenzpositionen, so dass die Stärke des Gasstromes durch das Ventil kontinuierlich geregelt wird, wobei die genannten beiden Grenzpositionen durch einen Abstand voneinander getrennt sind, der gleich ist wie der Drehwinkel (α), in welchem ein Strömungsdurchlass (L) jeweils vollkommen offen und vollkommen geschlossen ist.

2. Ventil nach Patentanspruch 1, bei welchem das Ventilelement (7) einen dritten Ring (11) enthält, welcher an den ersten oder den zweiten Ring (6, 10) angrenzend angeordnet ist und als ein zweites Ventilelement von einer bestimmten radialen Tiefe (S) funktioniert und einem Winkelwert aufweist, der sich dem Drehwinkel (α) nähert, und der unabhängig von dem zweiten Ring (10) drehbar ist durch die Wirkung von zweiten Antriebsmitteln (8s) zwischen einer Grenzposition des radialen Nichteingreifens und einer Grenzposition des radialen Eingreifens, in welcher das zweite Ventilelement um denselben Winkel (α) innerhalb des Strömungsdurchlasses (L) versetzt ist, der durch das erste Ventilelement (7) gebildet wird, und zwar auf solche Weise, dass ein unterschiedlicher Strömungswert des Gases von der ersten Rohrleitung (3) zu der zweiten Rohrleitung (4) bestimmt wird.

3. Ventil nach Patentanspruch 2, bei welchem der dritte Ring (11) zwischen dem ersten Ring (6) und dem zweiten Ring (10) eingesetzt ist.

4. Ventil nach Patentanspruch 2, bei welchem der dritte Ring (11) einen Abschnitt der radialen Tiefe (S) aufweist, der als ein Kreissektor mit einem Profil (Pr) erscheint, dessen Tiefe sich entweder kontinuierlich oder durch kleine Inkrementierungen verändert.

5. Ventil nach Patentanspruch 1, bei welchem die Halbkörper (1, 2) eine zweite radiale Kammer (12) einschliessen, die symmetrisch der ersten radialen Kammer (9) angepasst ist und von ersten, zweiten und dritten Ringen (6', 10', 11') belegt wird, jeweils identisch mit den Ringen (6, 10, 11) der ersten Kammer, von welchen der zweite Ring (10') an die Antriebsmittel (8) angeschlossen ist, und zwar durch eine vertikal angeordnete Spindel (13), die durch die Halbkörper (1, 2) verläuft und die Ringe von beiden radialen Kammern (9, 12) miteinander verbindet.

6. Ventil nach Patentanspruch 1, bei welchem die Antriebsmittel (8) aus einem elektrischen Antrieb (14) bestehen, welcher durch einen Montagebügel (15) an der oberen Fläche der miteinander verbundenen Halbkörper (1, 2) befestigt und an eine vertikale Spindel (13) angeschlossen ist, letztere drehbar um ihre eigene Achse und in der Mitte durch die Halbkörper (1, 2) gehend, auf welche in ihrer Mitte der zweite Ring (10) aufgezogen ist.

7. Ventil nach den Patentansprüchen 2 und 5, bei welchem die zweiten Antriebsmittel (8s) aus einem flüssigkeitsdichtenden Gehäuse (16) bestehen, das seitlich an einem Halbkörper (1, 2) angebracht und rechtwinklig zu der Achse (X) der Rohrleitungen (3, 4) angeordnet ist, in dessen Innerem sich ein drehbarer vertikaler Zapfen (17) angeordnet befindet, dessen Enden jeweilige verzahnte Räder (18, 19) tragen, die sich mit entsprechenden Verzahnungen (20) im Eingriff befinden, welche von den jeweiligen dritten Ringen (11, 11') aufgewiesen werden, sowie ein Schaft (21), der mit dem vertikalen Zapfen (17) verbunden ist und vertikal aus dem Gehäuse (16) herausragt, und der an wenigstens einen Hebel (22) angeschlossen ist, durch welchen die Position der dritten Ringe (11, 11') eingestellt wird.

## Revendications

1. Arrangement de soupape pour régler l'écoulement de gaz destiné à être monté dans des conduits, ledit arrangement comprenant :
- au moins un premier demi-boîtier (1) et un deuxième demi-boîtier (2), présentant chacun un trou central, lesdits demi-boîtiers (1, 2) étant réciproquement opposés et raccordés axialement par l'intermédiaire de brides étanches (1f, 2f) suivant un axe horizontal (X) et étant adaptés pour être respectivement associés avec un premier conduit (3), par lequel le gaz arrive à une pression d'entrée, et un deuxième conduit (4) par lequel le gaz sort de la soupape à une pression de sortie appropriée ;
- au moins un premier obturateur de type à disque (7) ; et
- des moyens d'actionnement externes (8) ;
caractérisé en ce que
- lesdits demi-boîtiers (1, 2) comprennent une première chambre radiale (9) destinée au passage du gaz et à l'intérieur de laquelle l'obturateur (7) est placé ;
- ledit obturateur de type à disque (7) comprend une première bague (6) et une deuxième bague (10),
ladite première bague (6) étant fixée aux demi-boîtiers (1, 2) et présentant une portion fermée de valeur d'angle proche de l'angle (α) de rotation, ladite deuxième bague (10), supportée par la première bague (6) et présentant de la même façon une portion fermée de valeur d'angle proche de l'angle (α) de rotation, étant parallèle à la première bague (6) et interagissant avec cette même première bague, et étant contrainte à tourner, sur son axe vertical (Y) perpendiculaire à l'axe horizontal (X) susmentionné, avec les moyens d'actionnement (8) entre une pluralité de positions intermédiaires d'angle distinct comprises entre deux positions limites de façon à réguler en permanence le débit de gaz passant par la soupape, ces deux positions limites étant séparées par une distance égale à l'angle (α) de rotation, où un passage d'écoulement (L) est respectivement complètement ouvert et complètement fermé.

2. Soupape selon la revendication 1, dans laquelle l'obturateur (7) comprend une troisième bague (11) placée à côté de la première ou de la deuxième bague (6, 10), fonctionnant comme un deuxième obturateur d'épaisseur radiale (S) préétablie et de valeur d'angle proche de l'angle (α) de rotation, pouvant être tournée, de façon indépendante par rapport à la deuxième bague (10), par l'action de deuxième moyens d'actionnement (8s) entre une position limite de non-interférence radiale, et une position limite d'interférence radiale dans laquelle le deuxième obturateur est tourné du même angle (α), au niveau du passage d'écoulement (L) défini par le premier obturateur (7), de façon à établir un débit de gaz différent du premier conduit (3) au deuxième conduit (4).

3. Soupape selon la revendication 2, dans laquelle la troisième bague (11) est placée entre la première bague (6) et la deuxième bague (10).

4. Soupape selon la revendication 2, dans laquelle la troisième bague (11) présente une portion d'épaisseur radiale (S) conformée en secteur circulaire et présentant un profil (Pr) dont l'épaisseur peut varier de manière continue ou par incréments discrets.

5. Soupape selon la revendication 1, dans laquelle les demi-boîtiers (1, 2) comprennent une deuxième chambre radiale (12) symétrique à la première chambre radiale (9) et contenant des première, deuxième et troisième bagues (6', 10', 11') respectivement identiques aux bagues (6, 10, 11) de la première chambre, parmi lesquelles la deuxième bague (10') est couplée aux moyens d'actionnement (8) par l'intermédiaire d'une barre (13) verticale passant à travers les demi-boîtiers (1, 2) et reliant entre elles les bagues des deux chambres radiales (9, 12).

6. Soupape selon la revendication 1, dans laquelle les moyens d'actionnement (8) consistent en un actionneur électrique (14) fixé sur le dessus des demi-boîtiers (1, 2) par l'intermédiaire d'un support de montage (15) et couplé à une barre verticale (13), pouvant tourner sur son propre axe et traversant centralement les demi-boîtiers (1, 2), et au centre de laquelle la deuxième bague (10) est fixée.

7. Soupape selon les revendications 2 et 5, dans laquelle les deuxièmes moyens d'actionnement (8s) consistent en une boîte étanche (16) fixée sur le côté d'un demi-boîtier (1, 2) et placée perpendiculairement à l'axe (X) des conduits (3, 4), cette boîte contenant un pivot (17), tournant et vertical, dont les extrémités supportent des roues dentées (18, 19) respectives qui engrènent dans des dentures (20) correspondantes présentées par les troisièmes bagues (11, 11') respectives, et contenant également une tige (21) solidaire du pivot vertical (17), saillant verticalement de la boîte (16) et reliée à au moins un levier (22) par l'intermédiaire duquel il est possible de régler la position des troisièmes bagues (11, 11').
